(19) **Europäisches Patentamt European Patent Office Office européen des brevets**

(11) **EP 4 467 969 A1**

(12) **EUROPEAN PATENT APPLICATION**

(43) Date of publication:
**27.11.2024 Bulletin 2024/48**

(21) Application number: **23174630.6**

(22) Date of filing: **22.05.2023**

(51) International Patent Classification (IPC):
**G01N 25/18** $^{(2006.01)}$      **G01N 27/18** $^{(2006.01)}$

(52) Cooperative Patent Classification (CPC):
**G01N 25/18**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Sensirion AG**
**8712 Stäfa (CH)**

(72) Inventors:
• **RÜEGG, Andreas**
  **8708 Männedorf (CH)**
• **HUBER, Lucas**
  **7320 Sargans (CH)**
• **STUDER, Matthias**
  **8708 Männedorf (CH)**

(74) Representative: **Detken, Andreas**
  **Isler & Pedrazzini AG**
  **Giesshübelstrasse 45**
  **Postfach 1772**
  **8027 Zürich (CH)**

(54) **COMPENSATION OF VARIATIONS OF AMBIENT TEMPERATURE IN A THERMAL SENSOR DEVICE**

(57)    A thermal sensor device comprises a heater or cooler (31) and first and second temperature sensing element (TS1, TS2). A thermal signal (0) is derived based on responses ($V_{TS1}$, $V_{TS2}$) of the temperature sensing elements to a thermal stimulus created by the heater or cooler. Each of the temperature sensing elements has a temperature-dependent intensive physical property that influences the response of the temperature sensing element to the thermal stimulus, these intensive physical properties having different temperature dependencies. The thermal signal (0) is a combination of two signals that are based on the responses of the temperature sensing elements to the thermal stimulus. The combination is formed such that at predetermined reference conditions, the thermal signal ($\Theta$) is sensitive to changes of a target property of a target fluid while having a reduced sensitivity to changes of an ambient temperature ($T_a$) of the thermal sensor.

FIG. 7

EP 4 467 969 A1

## Description

### TECHNICAL FIELD

The present invention relates to a thermal sensor device and to a method of operating a thermal sensor device.

### PRIOR ART

To measure the gas concentration of a target gas in a carrier gas, thermal gas concentration sensors utilize the concentration dependency of the thermal conductivity of the gas mixture. The heat conduction through the gas can be measured by creating a thermal stimulus using a heating or cooling element and measuring the signal of one or more temperature-sensitive sensing elements after applying the thermal stimulus.

Most commonly, the sensing elements in thermal sensors are either based on thermistors or on thermopiles. Thermistors are resistors with a strongly temperature dependent resistance. As such, they measure the absolute temperature. In contrast, thermopiles use the Seebeck effect to convert a temperature difference between "hot" and "cold" junctions into a voltage. As such, thermopiles measure the temperature of the hot junctions relative to the cold junctions.

The thermal measurement principle for gas concentration generally depends on the temperature of the gas or, more generally, on the ambient temperature that is "seen" by the sensing elements of the thermal sensor in the absence of the thermal stimulus. The ambient temperature can influence the measurement results in two ways. First, the thermal conductivity of a gas depends on its temperature. Second, also the physical properties of the materials that are used for sensing temperature (such as the Seebeck coefficients of the junction materials in the case of a thermopile or the electrical resistivity in the case of a thermistor) can depend on ambient temperature and can thereby affect the sensor signal. Hence, it is desirable to compensate for the cross-dependency of the concentration signal on ambient temperature.

### SUMMARY OF THE INVENTION

It is an object of the present invention to provide a thermal sensor device for determining a target property of a target fluid, the thermal sensor device exhibiting a reduced cross-sensitivity to changes in ambient temperature.

This object is achieved by a thermal sensor device having the features of claim 1. Further embodiments of the invention are laid down in the dependent claims.

Accordingly, a thermal sensor device is provided, comprising:

a heater or cooler;
a first temperature sensing element;
a second temperature sensing element; and
control circuitry for operating the heater or cooler to create a thermal stimulus and for deriving a thermal signal based on responses of the first and second temperature sensing elements to the thermal stimulus.

According to the invention, the first temperature sensing element has a first temperature-dependent intensive physical property whose temperature dependence influences the response of the first temperature sensing element to the thermal stimulus, the second temperature sensing element has a second temperature-dependent intensive physical property whose temperature dependence influences the response of the second temperature sensing element to the thermal stimulus, and the first and second temperature-dependent intensive physical properties have different temperature dependencies.

The thermal signal is a combination signal formed from a first signal and a second signal, each of the first and second signals being based on the responses of the first and second temperature sensing elements to the thermal stimulus. In some embodiments, each of the first and second signals may directly correspond to the response of one of the temperature sensing elements to the thermal stimulus. In other embodiments, each of the first and second signals may be based on these responses, e.g., by being derived from the response of one of the temperature sensing elements through a normalization operation or by being derived from the responses of one or both temperature sensing elements in some more complex manner. Some examples will be provided below.

The control circuitry is configured to form the combination signal such that, at least at predetermined reference conditions (e.g., reference ambient temperature, reference pressure of the target fluid and reference target property), the thermal signal is sensitive to changes of the target property while having a weaker (smaller) sensitivity to changes of an ambient temperature of the thermal sensor relative to its sensitivity to changes of the target property than each of the responses of the first and second temperature sensing elements and/or than each of the first and second signals. Preferably, the resulting thermal signal is even essentially insensitive to changes of the ambient temperature.

This may be expressed mathematically as follows:

$$\left| \frac{\left(\frac{\partial \Theta}{\partial T_a}\right)_{ref}}{\left(\frac{\partial \Theta}{\partial x_{target}}\right)_{ref}} \right| < \left| \frac{\left(\frac{\partial V_{TSi}}{\partial T_a}\right)_{ref}}{\left(\frac{\partial V_{TSi}}{\partial x_{target}}\right)_{ref}} \right| \quad (i = 1,2),$$

and/or

$$\left| \frac{\left(\frac{\partial \Theta}{\partial T_a}\right)_{ref}}{\left(\frac{\partial \Theta}{\partial x_{target}}\right)_{ref}} \right| < \left| \frac{\left(\frac{\partial \Theta_i}{\partial T_a}\right)_{ref}}{\left(\frac{\partial \Theta_i}{\partial x_{target}}\right)_{ref}} \right| \quad (i = 1,2),$$

and more preferably

$$\left(\frac{\partial \Theta}{\partial T_a}\right)_{ref} \approx 0.$$

Here, 0 designates the thermal signal, $V_{TS1}$ and $V_{TS2}$ designate the responses of the first and second temperature sensing elements, respectively, to the thermal stimulus, $\Theta_1$ and $\Theta_2$ designate the first and second signals, respectively, $T_a$ designates the ambient temperature, $x_{target}$ designates the target property,

$$\left(\frac{\partial .}{\partial T_a}\right)_{ref}$$

designates a partial derivative with respect to the ambient temperature at the reference conditions, and

$$\left(\frac{\partial .}{\partial x_{target}}\right)_{ref}$$

designates a partial derivative with respect to the target property at the reference conditions.

The target property may be any property that correlates with the thermal signal. For example, the target property may be the thermal conductivity of the target fluid or, if the target fluid is a gas mixture, the concentration of a target gas in the gas mixture.

The invention uses temperature sensing elements that each have an intensive physical property that is used for temperature sensing. In some embodiments, each of the first and second temperature sensing elements comprises at least one thermopile, and the intensive physical property that is used for temperature sensing is the effective Seebeck coefficient that is associated with each of the thermopiles. The effective Seebeck coefficients of two thermopiles and accordingly also their temperature dependencies are different if different materials are used for forming the thermopiles.

In other embodiments, each of the first and second temperature sensing elements comprises at least one thermistor. The temperature-dependent intensive physical property that is used for temperature sensing then is the resistivity of each thermistor. The resistivities of two thermistors (and accordingly also their temperature dependencies) are different if different materials are used for forming the thermistors. In particular, the thermistor of one temperature sensing element may be a PTC-type thermistor, while the thermistor of the other temperature sensing element is an NTC-type thermistor.

The invention is not limited to the use of thermopiles or thermistors as long as temperature sensing elements having intensive physical properties with different temperature dependencies are used. In this manner, a combination of first and second signals can always be formed that is less sensitive to changes of the ambient temperature than each signal alone.

The combination signal may be a weighted difference of the first and second signals. In some embodiments, the weighted difference may be formed according to the formula

$$\Theta = \Theta_1 - w\,\Theta_2$$

where $\Theta_1$ and $\Theta_2$ designate the first and second signals, respectively, and w designates a weight, wherein the weight meets the formula

$$w = \frac{\left(\dfrac{\partial \Theta_1}{\partial T_a}\right)_{ref}}{\left(\dfrac{\partial \Theta_2}{\partial T_a}\right)_{ref}},$$

wherein $T_a$ designates the ambient temperature, wherein

$$\left(\frac{\partial \Theta_1}{\partial T_a}\right)_{ref}$$

designates a partial derivative of the first signal with respect to the ambient temperature at the reference conditions, and wherein

$$\left(\frac{\partial \Theta_2}{\partial T_a}\right)_{ref}$$

designates a partial derivative of the second signal with respect to the ambient temperature at the reference conditions.

By forming a weighted difference according to the above equations, it is ensured that, at the reference conditions, the thermal signal is essentially insensitive to changes of the ambient temperature. It should however be noted that a reduction of the sensitivity of the thermal signal to changes of the ambient temperature can also be obtained if the above equations are not met or are met only approximately.

While forming a weighted difference is a particularly simple way of rendering the thermal signal insensitive to changes of the ambient temperature, it should be noted that this is not the only possibility of forming a combination signal. For example, instead of forming a weighted difference, a more complex operation involving the first and second signals is conceivable, for example, an operation that involves division of these signals. Some general considerations on how to determine suitable quantities that are insensitive to changes of ambient temperature by considering partial derivatives and an example of a thermal signal that is not a weighted difference of first and second signals will become apparent from the detailed discussion below.

In some embodiments, the first and second temperature sensing elements are arranged and configured such that the responses of the first and second temperature sensing elements to the thermal stimulus at the reference conditions have different sensitivities to changes of the target property of the target fluid while having essentially the same sensitivity to changes of the ambient temperature. For example, if the first and second temperature sensing elements are thermopiles, the number and location of the hot junctions of each thermopile can be optimized such that the thermopiles have the same sensitivity to changes of the ambient temperature. The weighted differential signal may then be formed in hardware by connecting the first and second temperature sensing elements in an anti-series configuration.

The sensitivity of the thermal signal to heater drifts or cooler drifts can be reduced if the thermal sensor device further comprises a third temperature sensing element (a "spy temperature sensing element") arranged to determine an indicator of a magnitude of the thermal stimulus created by the heater or cooler. The processing circuitry may then be configured to carry out a normalization of the responses of the first and/or second temperature sensing elements when deriving the thermal signal, using a signal from the third temperature sensing element. This operation will in the following be called "spy normalization". The third temperature sensing element may be of the same type as the first and second temperature sensing elements. For example, in some embodiments, the first, second and third temperature sensing elements may all be thermopiles or thermistors. In other embodiments, the third temperature sensing element may be of a different type than the first and second temperature sensing elements. For example, the third temperature sensing element may be a diode-based sensor, or it may be a device that directly measures the resistance of the heater or cooler during its operation.

The normalization can be carried out in a particularly elegant manner in hardware if the processing circuitry comprises an analog-to-digital converter having an analog voltage input and a reference voltage input. The analog voltage input may then receive a signal that is based on the responses of the first and/or second temperature sensing elements to the thermal stimulus, and the reference voltage input may receive a signal that is based on a response of the third temperature sensing element to the thermal stimulus.

In some embodiments, the third temperature sensing element has a third temperature-dependent intensive physical property whose temperature dependence influences a response of the third temperature sensing element to the thermal stimulus, the second and third temperature-dependent intensive physical properties have different temperature dependencies, and the second and third temperature sensing elements are arranged so as to be exposed to the same temperature distribution. In this manner, the signal from the second temperature sensing element, divided by the signal from the third temperature sensing element, will to first order become independent of the target property. In this manner, the sensitivity of the first temperature sensing element to the target property is not appreciably reduced when the combination of the first and second signals is formed.

In some embodiments, the first temperature sensing element is disposed on a first measurement structure and the second temperature sensing element is disposed on a second measurement structure. The first and second measurement structures may have different heat dissipation capabilities. The target fluid may be a mixture of a carrier gas, a target gas and a disturbance gas, and the target property may be a concentration of the target gas. The processing circuitry may then be configured to derive the combination signal in such a manner that, at least at the reference conditions, the thermal signal is sensitive to changes of the concentration of the target gas while having a weaker sensitivity to changes of a concentration of the disturbance gas relative to its sensitivity to changes of the concentration of the target gas than each of the responses of the first and second temperature sensing elements due to the different heat dissipation capabilities of the first and second measurement structures. This may be expressed mathematically as follows:

$$\left| \frac{\left(\frac{\partial \Theta}{\partial x_D}\right)_{ref}}{\left(\frac{\partial \Theta}{\partial x_{target}}\right)_{ref}} \right| < \left| \frac{\left(\frac{\partial V_{TSi}}{\partial x_D}\right)_{ref}}{\left(\frac{\partial V_{TSi}}{\partial x_{target}}\right)_{ref}} \right| \; (i = 1,2),$$

Here, $x_D$ designates the concentration of the disturbance gas, and

$$\left(\frac{\partial .}{\partial x_D}\right)_{ref}$$

designates a partial derivative with respect to the concentration of the disturbance gas at the reference conditions.

For more details, reference is made to the detailed description below.

The thermal sensor device may comprise a substrate having an opening or recess. The first measurement structure may be a first measurement bridge that spans the opening or recess, and the second measurement structure may be a second measurement bridge that spans the opening or recess. The first and second measurement bridges may then differ with respect to dimensions and/or structure such that the first and second measurement bridges have different heat dissipation capabilities.

The heater may be arranged on a heater bridge that also spans the opening or recess, the heater bridge being arranged at a first distance from the first measurement bridge and at a second distance from the second measurement bridge. In some embodiment, each of the first and second distances may be in a range where the Knudsen effect is appreciable, e.g., in a range between 2 and 100 micrometers. The processing circuitry may then be configured to derive the combination signal in such a manner that the thermal signal is sensitive to changes of the target property of the target fluid while having a weaker sensitivity to changes of pressure than each of the responses of the first and second temperature sensing elements due to the Knudsen effect. This may be expressed mathematically as follows:

$$\left| \frac{\left(\frac{\partial \Theta}{\partial p}\right)_{ref}}{\left(\frac{\partial \Theta}{\partial x_{target}}\right)_{ref}} \right| < \left| \frac{\left(\frac{\partial V_{TSi}}{\partial p}\right)_{ref}}{\left(\frac{\partial V_{TSi}}{\partial x_{target}}\right)_{ref}} \right| \; (i = 1,2),$$

Here, p designates the pressure of the target fluid, and

$$\left(\frac{\partial .}{\partial p}\right)_{ref}$$

designates a partial derivative with respect to pressure at the reference conditions.

Again, for more details, reference is made to the detailed description below.

The present invention further provides a method for determining a target property of a target fluid, the method comprising:

exposing the thermal sensor device of any one of the preceding claims to the target fluid;
creating a thermal stimulus using the heater or cooler;
deriving a thermal signal based on responses of the first and second temperature sensing elements to the thermal stimulus; and
determining the target property based on the thermal signal,
wherein the thermal signal is a combination signal formed from a first signal and a second signal, each of the first and second signals being based on the responses of the first and second temperature sensing elements to the thermal stimulus, and
wherein the combination signal is formed such that, at least at predetermined reference conditions, the thermal signal is sensitive to changes of the target property of the target fluid while having a weaker sensitivity to changes of an ambient temperature of the thermal sensor relative to its sensitivity to changes of the target property than each of the responses of the first and second temperature sensing elements.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

| | |
|---|---|
| Figs. 1A-1D | each show, in a schematic and simplified manner, an example of a thermopile; |
| Fig. 2 | shows a schematic top view of a thermal sensor device according to a first embodiment (not to scale); |
| Fig. 3 | shows a schematic top view of a thermal sensor device according to a second embodiment (not to scale); |
| Fig. 4 | shows a schematic circuit diagram illustrating spy normalization in hardware; |
| Fig. 5 | shows a schematic top view of a thermal sensor device according to a third embodiment (not to scale); |
| Fig. 6A | shows a schematic top view of a thermal sensor device according to a fourth embodiment (not to scale); |
| Fig. 6B | shows a schematic sectional view of the sensor in Fig. 6A in plane I-I (not to scale); |
| Fig. 7 | shows a schematic top view of a thermal sensor device according to a fifth embodiment (not to scale); |
| Fig. 8 | shows a schematic top view of a thermal sensor device according to a sixth embodiment (not to scale); |
| Fig. 9 | shows a schematic circuit diagram illustrating readout of two thermistors; and |
| Fig. 10 | shows a schematic block diagram of processing circuitry that may be used in the thermal sensor device. |

DESCRIPTION OF PREFERRED EMBODIMENTS

Definitions

In the present disclosure, the term "thermal sensor" is to be understood to relate to a sensor that contains at least one heater or cooler and that returns at least one "thermal signal" in response to a thermal stimulus applied by the heater or cooler. The heater or cooler is arranged in such a manner that at least a portion of the heat that is transported in response to the thermal stimulus is transported through a fluid sample. The thermal stimulus may be caused, for example, by a change of power applied to the heater or cooler, in particular a step change of power, e.g., a heat pulse or a cooling pulse.

The term "thermal signal" is to be understood to relate to any analog or digital electrical signal which is sensitive to absolute and/or relative changes of the temperature distribution across a sensing area of the thermal sensor in response to the thermal stimulus. The term "sensing area" is to be understood as designating the region of the thermal sensor that experiences a detectable temperature change in response to the thermal stimulus.

The term "thermal signal" shall not include signals from integrated or external temperature sensors that are insensitive to the thermal stimulus caused by the heater or cooler. In other words, a signal that is insensitive to the temperature distribution across the sensing area is not considered a thermal signal.

The term "ambient temperature" is to be understood as relating to the temperature that is "seen" by the sensing elements of the thermal sensor in the absence of the thermal stimulus. The ambient temperature may essentially correspond to the temperature of the fluid sample that is in contact with the thermal sensor. However, the ambient temperature may also reflect the effects of self-heating of the thermal sensor by heat that is dissipated by electric currents flowing in the thermal sensor.

The term "fluid" is to be understood as encompassing any material that is able to flow, in particular gases and liquids as well as homogeneous or heterogeneous mixtures involving gases and liquids, such as aerosols, foams, emulsions, suspensions of solids in liquids, etc.

A "thermopile" is a device that converts thermal energy into electrical energy. It is composed of one or more thermocouples. A thermocouple is a device consisting of two dissimilar electrical conductors forming an electrical junction. A thermocouple produces a temperature-dependent voltage as a result of the Seebeck effect, and this voltage can be interpreted to measure temperature. The Seebeck effect is the electromotive force (emf) that develops across two points of an electrically conducting material when there is a temperature difference between them. The derivative of the emf with respect to the temperature difference is called the (absolute) Seebeck coefficient of the material. When two materials with different absolute Seebeck coefficients form a junction, the difference of the Seebeck coefficients of the individual materials is called the (relative) Seebeck coefficient of the junction. The Seebeck coefficient of a material generally depends on the absolute temperature of the material. The thermocouples in a thermopile are usually connected in series, with junctions alternately being arranged at the temperature to be measured ("hot junctions") and at some reference temperature ("cold junctions") such that the thermoelectric voltages of the thermocouples add up. However, a thermopile may also be formed by other, possibly more complex arrangements of identical or different thermocouples, and the term "thermopile" is to be understood broadly as encompassing any arrangement of one or more thermocouples that provides a thermoelectric voltage, the thermoelectric voltage being indicative of and preferably proportional to a temperature difference between the hot and cold junctions. Some examples will be provided below.

A "thermistor" is an electric resistor whose resistance is dependent on temperature. Thermistors are divided based on their conduction model. Negative Temperature Coefficient (NTC) thermistors have less resistance at higher temperatures, while Positive Temperature Coefficient (PTC) thermistors have more resistance at higher temperatures. The derivative of the resistance with respect to the temperature is called the temperature coefficient of the thermistor.

An "intensive physical property" is a property whose magnitude is independent of the size of the system.

Forming a combination signal from the signals of two temperature sensors with different temperature coefficients

The present disclosure proposes forming a thermal signal which, at some predetermined reference conditions (defined, e.g., by a reference fluid, a reference pressure, and a reference ambient temperature), is essentially insensitive to small changes of the ambient temperature away from the reference ambient temperature. To this end, a thermal sensor is proposed which contains at least two distinct temperature sensing elements, the two temperature sensing elements giving rise to two distinct thermal response signals when a thermal stimulus is created by a heater or cooler. Two signals $\Theta_1$ and $\Theta_2$ are formed, based on the thermal response signals.

The two temperature sensing elements comprise different materials, each material having at least one temperature-dependent intensive physical property that is employed for temperature sensing, these intensive physical properties having different temperature dependencies. If the temperature sensing elements are thermopiles, the junctions of the thermocouples of the thermopiles may be formed from different pairs of materials, and the temperature-dependent intensive physical property then is the effective Seebeck coefficient of the thermopile. In the case of thermistors, the thermistors may be formed from thermoresistive materials whose electrical resistivities have different temperature coefficients, and the temperature-dependent intensive physical property then is the electrical resistivity.

A weighted differential signal may then be formed:

$$\Theta = \Theta_1 - w\,\Theta_2 \qquad\qquad \text{Eq. (1)}$$

in such a way that $\Theta$ is insensitive to variations of the ambient temperature,

$$\left(\frac{\partial \Theta}{\partial T_a}\right)_{ref} = 0, \qquad\qquad \text{Eq. (2)}$$

but still sensitive to variations of the target property,

$$\left(\frac{\partial\Theta}{\partial x_{target}}\right)_{ref} \neq 0. \qquad\qquad \text{Eq. (3)}$$

Condition Eq. (2) is fulfilled when the weight is set as the ratio of the derivatives of the thermal response signals $\Theta_1$ and $\Theta_2$ with respect to ambient temperature:

$$w = \frac{\left(\frac{\partial\Theta_1}{\partial T_a}\right)_{ref}}{\left(\frac{\partial\Theta_2}{\partial T_a}\right)_{ref}}. \qquad\qquad \text{Eq. (4)}$$

Condition Eq. (3) is fulfilled if the temperature dependencies of the two signals as measured in units of the target property (for example vol%/K in case of a gas concentration) differ. This is the case if the derivatives of the signals $\Theta_1$ and $\Theta_2$ with respect to ambient temperature, divided by their derivatives with respect to the target property, are different:

$$\frac{\left(\frac{\partial\Theta_1}{\partial T_a}\right)_{ref}}{\left(\frac{\partial\Theta_1}{\partial x_{target}}\right)_{ref}} \neq \frac{\left(\frac{\partial\Theta_2}{\partial T_a}\right)_{ref}}{\left(\frac{\partial\Theta_2}{\partial x_{target}}\right)_{ref}}. \qquad\qquad \text{Eq. (5)}$$

The weighted difference may be formed in software or in hardware. For example, the weighted difference may be formed in software by separately measuring the responses of the two temperature sensing elements to the thermal stimulus as voltages or currents, digitizing these responses and forming a weighted difference of the digitized responses in software. As another example, the weighted difference may be formed in hardware by separately measuring the responses of the two temperature sensing elements to the thermal stimulus as voltages or currents and forming the weighted difference by using appropriate analog circuitry such as a differential amplifier.

Special case of w = 1

In some embodiments, the two temperature sensing elements are configured in such a manner that the thermal response signals of the temperature sensing elements exhibit the same sensitivity to variations of ambient temperature while having different sensitivities to variations of the target property, such that the condition of Eq. (5) is fulfilled. A weighted differential signal with weight w = 1 may then be formed:

$$\Theta = \Theta_1 - \Theta_2.$$

The differential signal then is insensitive to variations of ambient temperature, but still sensitive to variations of the target property. If the temperature sensing elements are thermopiles, one can form a weighted difference with weight w = 1 in hardware simply by connecting thermopiles in an anti-series configuration. In order to ensure that both thermopiles have the same sensitivity to variations of ambient temperature, one can tune the number of thermocouples and/or the location of the hot junctions.

Mathematical model

In the following, a mathematical model is presented, which illustrates the above construction.
For the purposes of illustration, let us first assume that the temperature dependence of the two thermal signals entered exclusively via the temperature dependence of the thermal conductivity of the gas. i.e.,

$$\Theta_1(T_a) = f_1\big[\lambda_g(T_a)\big]$$
$$\Theta_2(T_a) = f_2\big[\lambda_g(T_a)\big] \qquad\qquad \text{Eq. (6)}$$

Here, $\lambda_g(T_a)$ denotes the temperature dependent thermal conductivity of the gas. Following the general

8

construction given above, the weight given in Eq. (4) would then be obtained as

$$w = \frac{\left(\frac{\partial f_1}{\partial \lambda_g}\right)_{ref}}{\left(\frac{\partial f_2}{\partial \lambda_g}\right)_{ref}}.$$

Unfortunately, the temperature compensated signal 0 [Eq. (1)] would not fulfill Eq. (5) and would now be also independent to variations in the target gas concentration, i.e.,

$$\left(\frac{\partial \Theta}{\partial x_{target}}\right)_{ref} = 0.$$

Such a signal 0 cannot be used as a raw signal for a thermal gas concentration sensor.

This illustrates a general challenge in constructing a temperature compensated thermal signal: If the temperature dependence of the thermal signals is dominated by the temperature dependence of the gas thermal conductivity, then a thermal signal with reduced sensitivity to the ambient temperature also displays a reduced sensitivity to the composition of the target gas.

In the present invention, this problem is solved by using temperature sensing elements having a temperature-dependent intensive physical property with different temperature coefficients, e.g., temperature sensing elements made from different materials.

To illustrate this point, let us consider a slight modification of Eq. (6):

$$\Theta_1(T_a) = r(T_a) f_1\big[\lambda_g(T_a)\big]$$
$$\Theta_2(T_a) = f_2\big[\lambda_g(T_a)\big]$$

Eq. (7)

In other words, we assume that the first thermal signal $\Theta_1(T_a)$ is proportional to an additional temperature dependent factor $r(T_a)$ with $\partial r/\partial T_a = 0$. Such a factor may, for example, arise when $\Theta_1$ is influenced by a different Seebeck coefficient than $\Theta_2$, the Seebeck coefficients having different temperature dependencies. The temperature-independent signal Eq. (1) is now obtained using the signal weight

$$w = \frac{\left[L_T(r) + L_\lambda(f_1)\frac{\partial \lambda_g}{\partial T_a}\right]\Theta_1}{L_\lambda(f_2)\Theta_2 \frac{\partial \lambda_g}{\partial T_a}}\Bigg|_{ref}.$$

Here, $L_T(r) = (\partial r/\partial T_a)/r$ denotes the logarithmic derivative of the factor r with respect to ambient temperature, and $L_\lambda(f_i) = (\partial f_i/\partial \lambda_g)/f_i$ with $i = 1, 2$ denotes the logarithmic derivative of the functions $f_1$ and $f_2$, respectively, with respect to thermal conductivity. The change to variations in the target gas concentration no longer vanishes:

$$\left(\frac{\partial \Theta}{\partial x_{target}}\right)_{ref} = -L_T(r)\Theta_1 \frac{\left(\frac{\partial \lambda_g}{\partial x_{target}}\right)}{\left(\frac{\partial \lambda_g}{\partial T_a}\right)}\Bigg|_{ref}$$

and is proportional to the logarithmic derivative of the temperature dependent factor $r(T_a)$.

Examples

In the following, concrete examples are illustrated which use either thermopiles or thermistors as temperature sensitive structures.

The thermocouples of the thermopiles consist of two dissimilar electrically conducting materials forming a junction. The two materials have different absolute Seebeck coefficients. Therefore, the relative Seebeck coefficient of the junction, i.e., the difference of the Seebeck coefficients of the two materials, does not vanish.

In some examples, the thermocouples of the thermopiles are based on the following material pairs:

- n-doped poly Si / Aluminum
- p-doped poly Si / Aluminum
- n-doped poly Si / p-doped poly Si

These types of thermocouples are easily fabricated within a CMOS process. The relative Seebeck coefficients and therefore the resulting voltages of these three types of thermocouples all have different temperature dependencies and can be used in the examples below.

Other important Seebeck materials used in microsensors are:

- Sb

- Bi

- Ge

- Si

- n-PbTe

- p- $Bi_{0.5}Sb_{1.5}Te_3$

- n-$Bi_{0.87}Sb_{0.13}$

Also, these materials may be used for forming the thermopiles in the below examples.

"Pure vs mixed-flavor" thermopiles

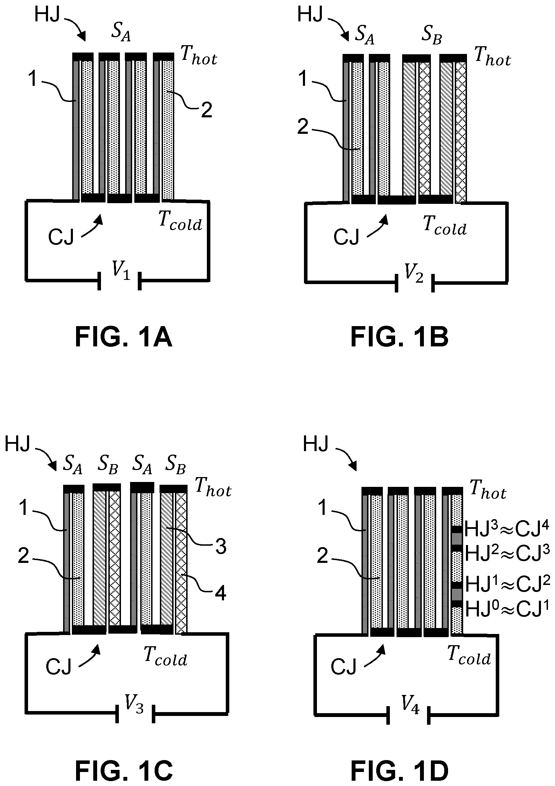

Various types of thermopiles may be employed in conjunction with the present disclosure. Figs. 1A to 1D illustrate some examples of thermopiles.

As illustrated in Fig. 1A, a thermopile may consist of a plurality of thermocouples of one sort with given relative Seebeck coefficient $S_A$, each thermocouple being formed by the same pair of materials 1 and 2, the thermocouple junctions being alternatingly disposed at a temperature $T_{hot}$ ("hot junctions" HJ) and a temperature $T_{cold}$ ("cold junctions" CJ). In this context, the designations "hot" and "cold" are used solely to distinguish the two types of junctions, and it is to be understood that these designations do not necessarily imply that the "hot junctions" are at a higher temperature than the "cold junctions". The thermocouples may be connected in a series configuration as shown with alternating hot and cold junctions, resulting in a thermoelectrical voltage $V = NS_A(T_{hot} - T_{cold})$, where $N$ is the total number of hot junctions.

As illustrated in Figs. 1B and 1C, a thermopile may also be of "mixed flavor", based on two different types of thermocouple junctions with different relative Seebeck coefficients $S_A$ and $S_B$ arranged in a series configuration as blocks (as in Fig. 1B) or interleaved (as in Fig. 1C). The thermoelectric voltage is then given by $V = NS_{eff}(T_{hot} - T_{cold})$ with an "effective Seebeck coefficient" $S_{eff}$ of the thermopile, which is given by $S_{eff} = \frac{N_A}{N}S_A + \frac{N_B}{N}S_B$, where $N_A$ designates the number of hot junctions with relative Seebeck coefficient $S_A$ and $N_B$ designates the number of hot junctions with relative Seebeck coefficient $S_B$. This allows to tune the properties of the effective Seebeck coefficient, in particular, its magnitude and temperature dependence, within some limits. For example, the thermocouples may be formed from any combination of the material pairs n-type Si and Al, p-type Si and Al or n-type Si and p-type Si. In the present disclosure, the term "effective Seebeck coefficient" is not only used in the case of "mixed-flavor" thermopiles, but also in case of a "pure-flavor" thermopile that comprises only one pair of materials. In the case of "pure-flavor" thermopile, the effective Seebeck coefficient simply corresponds to the relative Seebeck coefficient of the material pair.

Junctions of the same material pair 1 and 2 or of different material pairs may also be formed along one single temperature gradient, as in the rightmost branch of Fig. 1D. Considering the resulting thermocouples along the temperature gradient from $T_{cold}$ towards $T_{hot}$, each junction serves both as a hot junction HJ0, HJ1, HJ2, HJ3 for each thermocouple and as a cold junction CJ1, CJ2, CJ3, CJ4 for the subsequent thermocouple. Such an arrangement can be used to further tune the properties of the resulting effective Seebeck coefficient.

The above measures may be used individually or may be combined to tune the effective Seebeck coefficient at a reference temperature, the temperature dependence of the effective Seebeck coefficient, and the resulting total thermoelectric voltage.

Example 1 (plain vanilla)

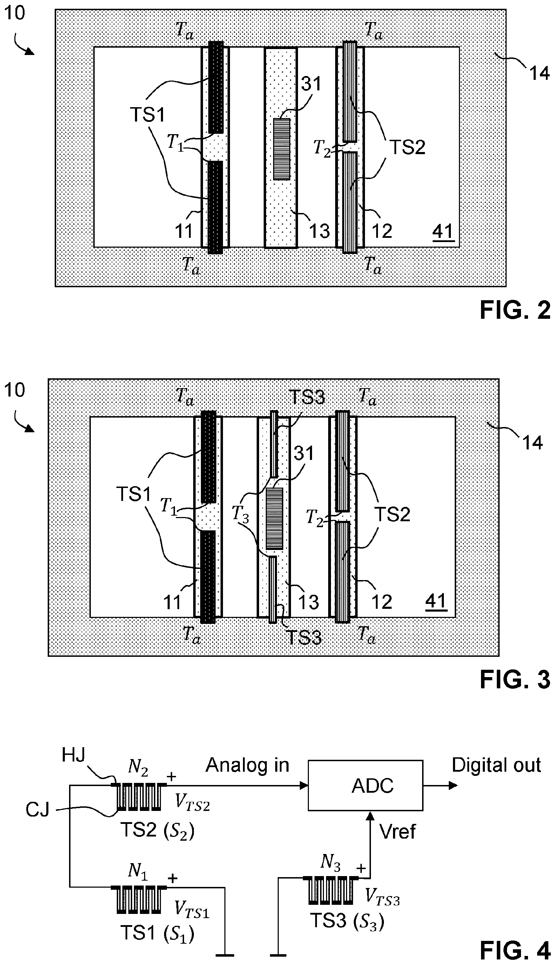

Fig. 2 illustrates a thermal sensor device 10 according to a first embodiment. The thermal sensor device 10 comprises one heater bridge 13 with a heater 31, sandwiched between two measurement bridges 11 and 12. The heater bridge 13 and the measurement bridges 11, 12 each span an opening or recess 41 in a substrate 14. The substrate may be a semiconductor chip, in particular, a silicon chip. The ends of the bridges are anchored in or on the substrate 14, whereby the bridges are suspended over the opening or recess 41. The bridges are mutually separated by voids (gaps). The bridges are arranged in a common plane, in the following called the "device plane". Each bridge may be formed by a plurality of dielectric layers, metal layers and/or polysilicon layers patterned from a layer stack on the substrate 14. The stack may be a CMOS layer stack. The layer stack may have been applied to the semiconductor chip and processed by typical CMOS methodology, as it is well known in the art. Further details about the setup and fabrication of a sensor device comprising several bridges than span an opening or recess are disclosed in EP3367087A2, whose contents are incorporated herein by reference in their entirety.

Each of the two measurement bridges 11, 12 carries a temperature sensing element TS1, TS2 in the form of a pair of thermopiles, the thermopiles on each bridge being connected in series. The thermopiles on measurement bridge 11 have an effective Seebeck coefficient $S_1$, while the thermopiles on measurement bridge 12 have an effective Seebeck coefficient $S_2$, these Seebeck coefficients being different and having different temperature dependencies. For example, the thermopiles on measurement bridge 11 may be formed from n-doped and p-doped poly-Si and the thermopiles on measurement bridge 12 may be formed from n-doped poly-Si and Al.

The hot junctions of each thermopile are arranged near the center of each measurement bridge. The cold junctions of all thermopiles are arranged on the substrate 14, which effectively acts as a heat sink with very large heat capacity and may therefore be assumed to have the same temperature $T_a$ for all thermopiles.

In operation, the thermal sensor device 10 is exposed to a fluid sample. In the following it will be assumed that the fluid sample consists of a mixture of a carrier gas, e.g., air, with a target gas, e.g., $CO_2$ or a refrigerant (e.g., a halocarbon compound). However, the same concept can as well be applied to any other fluid.

The heater element 31 is supplied with heating power to heat the heater bridge 13. The heating power may be provided, e.g., with a predetermined current, or the heating power may be regulated such that the heater element 31 assumes a predetermined temperature. For determining and regulating the temperature of the heater bridge 13, the resistance of the heater element 31 may be determined, the resistance being a measure of said temperature. When the heater element 31 is heated, heat flow occurs from the heater bridge 13 through the fluid sample into each of the measurement bridges 11, 12. After transient effects have decayed, the hot junctions of the temperature sensing elements TS1, TS2 on each measurement bridge 11, 12 assume a certain temperature $T_1$, $T_2$.

The resulting thermoelectric voltage of the temperature sensing element TS1 on the first measurement bridge is $V_{TS1} = N_1 S_1 (T_1 - T_a)$, and the thermoelectric voltage of the temperature sensing element TS2 on the second measurement bridge is $V_{TS2} = N_2 S_2 (T_2 - T_a)$, where $N_i$ with $i$ = 1,2 is the number of hot junctions of the respective temperature sensing element, $S_i$ is the effective Seebeck coefficient of each temperature sensing element, and $V_{TSi}$ designates the resulting thermoelectric voltage.

As explained above, these thermoelectric voltages depend on the thermal conductivity of the fluid and can therefore be used to determine a measure of the thermal conductivity of the fluid. In particular, for a given temperature of the heater bridge or for a given heater power, a change of thermal conductivity will cause a change of temperature of the hot junctions, which in turn will cause a change of the values $\Theta_1 = V_{TS1}$ and $\Theta_2 = V_{TS2}$. By calibration measurements using fluids with known thermal conductivities, a correlation between the thermal conductivity and the values of the thermal signal $\Theta = \Theta_1 - w \Theta_2$ can readily be established.

Example 2 (spy normalization)

Fig. 3 illustrates a thermal sensor device 10 according to a second embodiment. Again, the thermal sensor device 10 comprises one heater bridge 13 with a heater 31, sandwiched between two measurement bridges 11 and 12, each measurement bridge comprising a temperature sensing element TS1, TS2 in the form of a pair of thermopiles. The heater bridge 13 carries an additional, third temperature sensing element TS3 in the form of third pair of thermopiles connected in series, which in the following will be called the "spy sensing element". The spy sensing element generates a third thermoelectric voltage $V_{TS3} = N_3 S_3 (T_3 - T_a)$. Here, $T_3$ designates the temperature that is sensed by the hot junctions of the spy sensing element, $N_3$ designates the total number of hot junctions of the spy sensing element, and $S_3$ designates the effective Seebeck coefficient of the spy sensing element. The effective Seebeck coefficient of the spy sensing element may be different from the effective Seebeck coefficients of the temperature sensing elements TS1, TS2, or it may be equal to one of these effective Seebeck coefficients. The temperature of the hot junctions of the spy sensing element approximately corresponds to the heater temperature.

The following normalized values may be formed: $\Theta_1 = V_{TS1}/V_{TS3}$ and $\Theta_2 = V_{TS2}/V_{TS3}$. Such normalization using a spy sensing element TS3 will in the following be called "spy normalization". The values $\Theta_1$, $\Theta_2$ may then be used to determine the thermal signal $0 = \Theta_1 - w\,\Theta_2 = (V_{TS1} - wV_{TS2})/V_{TS3}$, and the determination of thermal conductivity may be based on this thermal signal.

By using spy normalization, the two signals $\Theta_1$ and $\Theta_2$ and therefore also the resulting thermal signal $\Theta = \Theta_1 - w\,\Theta_2$ are compensated for heater drifts.

Spy normalization may be carried out in hardware by using $V_{TS3}$ as the reference voltage in the ADC. Also forming of the differential signal may be carried out in hardware. This is illustrated in Fig. 4. The temperature sensing elements TS1 and TS2 are connected in an anti-series configuration to form a weighted difference $V_{TS1} - wV_{TS2}$ with weight $w = 1$ in hardware. As explained above, a choice of $w = 1$ is always possible if the numbers $N_1$ and $N_2$ of the hot junctions of the temperature sensing elements TS1 and TS2 and their locations are appropriately chosen. The weighted difference is fed to the "Analog in" port of an ADC. The thermoelectric voltage $V_{TS3}$ of the temperature sensing element TS3 is fed as a reference voltage Vref to the reference port of the ADC. The digital output at the "Digital out" port then reflects the ratio $(V_{TS1} - V_{TS2})/V_{TS3}$. The ADC can be of any type, such as a successive-approximation ADC, a delta-encoded ADC or a sigma-delta converter. All such converter designs require a reference voltage Vref and generate a digitized value of the input voltage, normalized by Vref. In addition to simplicity and insensitivity to heater drifts, an added advantage of using the thermoelectric voltage $V_{TS3}$ of the spy sensing element TS3 as the reference voltage Vref of the ADC is a reduction in common-mode noise.

Instead of forming the weighted difference in analog hardware, as described above, it is also possible to form the weighted difference in software after digitization. To this end, separate ADCs may be provided for the temperature sensing elements TS1 and TS2, or, after the decay of all transient behavior, the signals may be digitized one after the other using a single ADC Normalization by $V_{TS3}$ may advantageously again be carried out in hardware by using the output voltage of temperature sensing element TS3 as a reference voltage for the ADCs, or the output voltage of temperature sensing element TS3 may be digitized separately, and a numerical division may be carried out in software.

Example 3 (Temperature Compensation Thermopile TCTP)

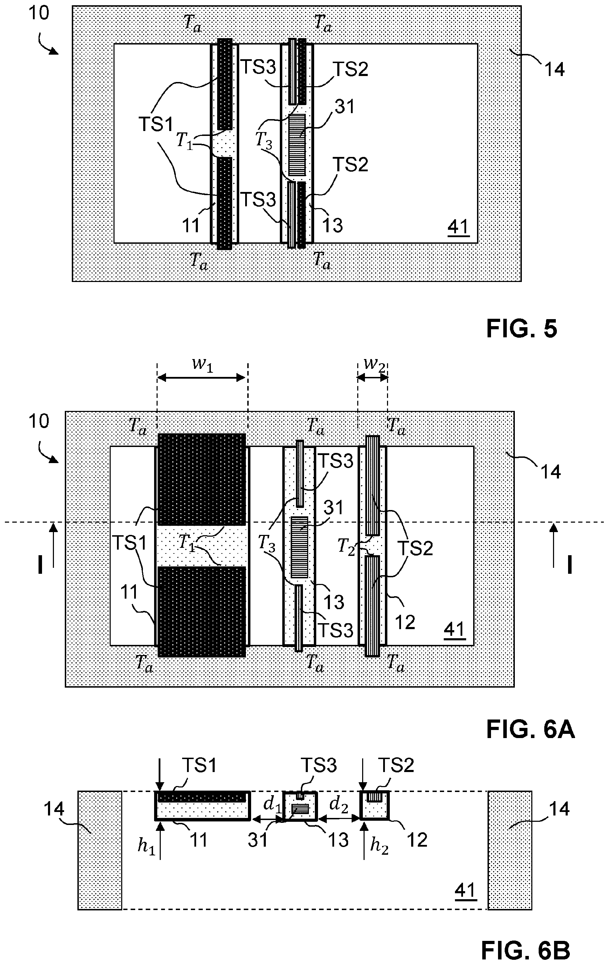

Fig. 5 illustrates a thermal sensor device 10 according to a third embodiment. In this embodiment, only one single measurement bridge 11 with one temperature sensing element TS1 in the form of a pair of thermopiles is present in addition to the heater bridge 13. The second temperature sensing element TS2 is arranged on the heater bridge 13 together with a third temperature sensing element TS3, each in the form of a pair of thermopiles. The temperature sensing elements TS2, TS3 have different effective Seebeck coefficients $S_2$, $S_3$ with different temperature dependencies, and they have the same or different number $N_2$, $N_3$ of hot junctions. The hot junctions of TS2 and TS3 are at the same temperature $T_3$, and their cold junctions are at the same temperature $T_a$, i.e., the temperature sensing elements TS2 and TS3 are exposed to the same temperature difference $(T_3 - T_a)$. The resulting thermoelectric voltages are $V_{TS2} = N_2 S_2 (T_3 - T_a)$ and $V_{TS3} = N_3 S_3 (T_3 - T_a)$, respectively. The ratio of these voltages $V_{TS2}/V_{TS3} = (N_2 S_2)/((N_3 S_3)$ is to first order independent of the difference $(T_3 - T_a)$ and therefore also independent of the composition of the surrounding fluid. However, if the Seebeck coefficients $S_2$, $S_3$ have different temperature dependencies $S_2(T_a)$, $S_3(T_a)$, the ratio $V_{TS2}/V_{TS3} = (N_2 S_2(T_a))/(N_3 S_3 (T_a))$ depends on the absolute ambient temperature $T_a$. Only in higher order, a weak cross-dependency on the composition of the fluid may enter due to the over temperature effect.

In this embodiment, we call TS2 a temperature compensation sensing element and the thermopiles of TS2 the Temperature Compensation Thermopiles (TCTP). As in the previous embodiment, TS3 acts as a spy sensing element and may be used for spy normalization. As in the previous embodiment, the following values may be formed: $\Theta_1 = V_{TS1}/V_{TS3}$ and $\Theta_2 = V_{TS2}/V_{TS3}$. The resulting thermal signal is then $\Theta = \Theta_1 - w\,\Theta_2 = (V_{TS1} - wV_{TS2})/V_{TS3}$.

One advantage of using a TCTP or, in more general terms, a temperature compensation sensing element is that one can temperature-compensate the signal $\Theta_1$ without losing sensitivity to the composition of the target fluid because the signal $\Theta_2 = V_{TS2}/V_{TS3}$ is essentially insensitive to the composition of the target fluid.

Combining temperature compensation with pressure compensation and/or humidity compensation

The general principle to obtain a temperature compensated signal can be combined with strategies to reduce the cross-dependency to pressure or, in the case where the fluid is a mixture of a carrier gas with a target gas and a disturbance gas, to reduce the cross-dependency to the disturbance gas. The carrier gas may be, for example, air, the target gas may be, for example, carbon dioxide or a refrigerant, and the disturbance gas may be, for example, water vapor. However, other combinations of carrier gas, target gas and disturbance gas may also be considered.

To illustrate this point, consider a fourth embodiment of a thermal sensor device 10 as shown in Figs. 6A and 6B. In this embodiment, a sensor bridge 13 with a heater 31 and a spy sensing element TS3 as in the second embodiment is sandwiched between two measurement bridges 11, 12 with first and second temperature sensing elements TS1, TS2 having different effective Seebeck coefficients $S_1$, $S_2$.

Each of the distances $d_1$ and $d_2$ between the heater bridge 13 and the measurement bridges 11, 12 may be in a range where the so-called Knudsen effect affects the thermoelectric voltages obtained from the first and second measurement bridges, i.e., in a range between 2 and 100 micrometers. The Knudsen effect is the phenomenon that the effective thermal conductivity of a gas in a microstructure depends on the geometrical dimensions of the microstructure when these geometrical dimensions are comparable to the mean free path of the gas molecules. Since the mean free path depends on the pressure, the effective thermal conductivity depends on pressure. By utilizing the resulting different pressure dependencies of the signals from the two measurement bridges, the pressure dependence of the thermal signal $\Theta$ can be reduced or even eliminated.

In addition or in the alternative, the first and second measurement bridges 11, 12 may have different heat dissipation capabilities. For example, the first and second measurement bridges may differ with respect to dimensions and/or structure such that they have different heat dissipation capabilities. In particular, the first measurement bridge may have a first width $w_1$ and a first thickness $h_1$ and may comprise a first layer stack. Similarly, the second measurement bridge may have a second width $w_2$ and a second thickness $h_2$ and may comprise a second layer stack. The second width may then be different from the first width, the second thickness may be different from the first thickness, and/or the second layer stack may have a different layer structure than the first layer stack, such that the first and second measurement bridges have different heat dissipation capabilities. The sensitivities of the signals from each measurement bridge to the target gas and to the disturbance gas depend differently on the heat dissipation capability of each measurement bridge. By utilizing the different heat dissipation capabilities of the two measurement bridges, the cross-dependency of the thermal signal 0 to the disturbance gas can thus be reduced or eliminated.

The heat dissipation capability of a measurement bridge may be quantified by its thermal conductance. The thermal conductance of a measurement bridge is to be understood as the rate of steady state heat flow from the measurement bridge into the substrate that is induced by a unit temperature difference between the center of the bridge and the substrate. The SI unit of thermal conductance is W/K. Thermal conductance is the reciprocal of thermal resistance, which is the temperature difference between the center of the bridge and the substrate when a unit of heat energy flows from the measurement bridge into the substrate per unit of time. Thermal conductance thus quantifies the capability of a measurement bridge to dissipate heat from the gas sample into the substrate, the substrate acting as a heat sink with very large heat capacity.

Using the thermal sensor of the present embodiment, it is possible to operate the heater 31 at a first heater power $P_1$ and define a weighted difference

$$\Theta_1 = \frac{V_{TS1}(P_1)}{V_{TS3}(P_1)} - u\,\frac{V_{TS2}(P_1)}{V_{TS3}(P_1)}$$

with a weight $u$ that renders $\Theta_1$ independent of pressure variations and/or of variations of the concentration of the disturbance gas.

The heater can subsequently be operated at a second heater power $P_2$. It is then possible to define

$$\Theta_2 = (1-v)\,\frac{V_{TS1}(P_1)}{V_{TS3}(P_1)} + v\,\frac{V_{TS1}(P_2)}{V_{TS3}(P_2)}$$

as the weighted sum of the signal ratio of $V_{TS1}/V_{TS3}$ when the heater is operated at a first heater power $P_1$ and at a second heater power $P_2$. The weight $v$ can be chosen such that $\Theta_2$ is also independent of pressure variations and/or of variations of the concentration of the disturbance gas.

Because the effective Seebeck coefficients of the thermopiles TS1 and TS2 are different and consequently also have different temperature dependencies, the two signals $\Theta_1$ and $\Theta_2$ behave differently in response to changes of ambient temperature $T_a$. We can then combine the two humidity- or pressure-independent signals $\Theta_1$ and $\Theta_2$ according to the construction given in Eq. (1)-Eq. (4).

For more information on how to choose the weight $u$, reference is made to US patent application No. 18/082,467 dated December 15, 2022 claiming priority of European patent application 21 215 403.3 dated December 17, 2021. The contents of these patent applications are incorporated herein by reference in their entirety. For example, for reducing or eliminating the cross-sensitivity to the disturbance gas, the optimum weight $u$ may be chosen as the ratio

$$u = \frac{\partial}{\partial x_D}\left(\frac{V_{TS1}(P_1)}{V_{TS3}(P_1)}\right) \Bigg/ \frac{\partial}{\partial x_D}\left(\frac{V_{TS2}(P_1)}{V_{TS3}(P_1)}\right)$$

of the sensitivities of the ratios $V_{TS1}(P_1)/V_{TS3}(P_1)$ and $V_{TS2}(P_1)/V_{TS3}(P_1)$ to changes of the concentration $x_D$ of the disturbance gas at predetermined reference conditions. These sensitivities can be readily determined by calibration measurements using varying concentrations of the disturbance gas. In practice, the optimum weight will depend on the heat dissipation capabilities of the measurement structures, on the location of the at least one heater element relative to the measurement structures, and on the heating power applied to the at least one heater element. Likewise, for reducing or eliminating the pressure dependence, the optimum weight can be chosen as the ratio

$$u = \frac{\partial}{\partial p}\left(\frac{V_{TS1}(P_1)}{V_{TS3}(P_1)}\right) \Bigg/ \frac{\partial}{\partial p}\left(\frac{V_{TS2}(P_1)}{V_{TS3}(P_1)}\right)$$

of the sensitivities of $V_{TS1}(P_1)/V_{TS3}(P_1)$ and $V_{TS2}(P_1)/V_{TS3}(P_1)$ to changes of the pressure $p$ at the predetermined reference conditions. These sensitivities can be readily determined by calibration measurement using the same fluid at different pressure values. In practice, the optimum weight will depend on the distances between the heater bridge and the measurement bridges. By simultaneously optimizing these distances, the heat dissipation capabilities of the measurement bridges and the weight, both the pressure dependence and the cross-sensitivity to the disturbance gas can simultaneously be reduced or eliminated.

For this optimization, simulations of heat transport with the heat equation under the Knudsen temperature-jump boundary condition at solid-gas interfaces may be carried out. Such simulations can be carried out, e.g., using the commercially available software package COMSOL Multiphysics, and therefore appropriate weights $u$ can be readily calculated.

For more information on how to choose the weight $v$, reference is made to U.S. patent No. 11,162,928, the content of which is incorporated herein in its entirety. Briefly, the weight $v$ may be chosen as follows:

$$v = \frac{\partial}{\partial x_D}\left(\frac{V_{TS1}(P_1)}{V_{TS3}(P_1)}\right) \Bigg/ \frac{\partial}{\partial x_D}\left(\frac{V_{TS1}(P_1)}{V_{TS3}(P_1)} - \frac{V_{TS1}(P_2)}{V_{TS3}(P_2)}\right)$$

to eliminate the dependency on the concentration of the disturbance gas, or

$$v = \frac{\partial}{\partial p}\left(\frac{V_{TS1}(P_1)}{V_{TS3}(P_1)}\right) \Bigg/ \frac{\partial}{\partial p}\left(\frac{V_{TS1}(P_1)}{V_{TS3}(P_1)} - \frac{V_{TS1}(P_2)}{V_{TS3}(P_2)}\right)$$

to eliminate the dependency on pressure.

In the example discussed above, it was assumed that spy normalization is carried out. Without spy normalization, the ratio $V_{TSi}(P_k)/V_{TS3}(P_k)$ with $i = 1, 2$ and $k = 1, 2$ would be replaced simply by $V_{TSi}(P_k)$ in all equations.

Extending the validity of the temperature compensation by using additional sensors

The above principles (spy normalization, temperature compensation sensing element and pressure/humidity compensation) may also be combined. In addition, further sensors may be added.

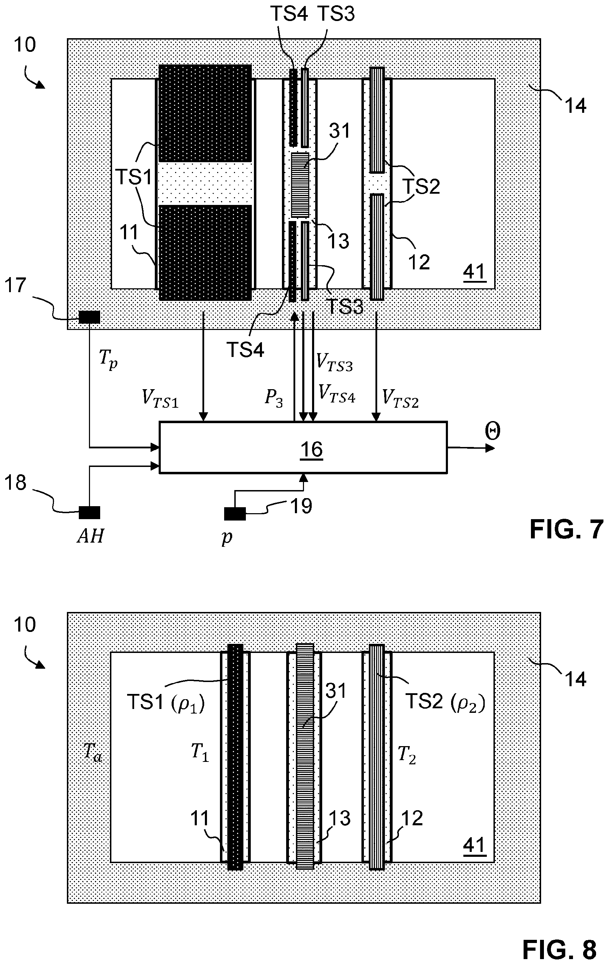

By the way of example, Fig. 7 illustrates a fifth embodiment of a microthermal sensor 10 that is configured like in the embodiment of Figs. 6A and 6B, but comprises an additional temperature compensation sensing element TS4 on the heater bridge 13. Also illustrated is processing circuitry 16 that receives the signals from all sensors, drives the heater 31, and computes the output signal $\Theta$.

Strictly speaking, the general construction given in Eq. (1)-Eq. (4) yields a thermal signal that is only compensated for a linear temperature dependency away from the reference conditions (defined by reference values of temperature, humidity, pressure, and target gas concentration).

To go beyond the linear order in temperature, one can use an external ambient temperature sensor 17, which determines the absolute value of the ambient temperature $T_a$ and define a temperature-dependent weight $w(T_a)$ such that the thermal signal $\Theta$ is independent on the absolute temperature $T_a$ in the whole temperature range of interest. For example, if the two thermal signals are approximated by quadratic functions in temperature as

$$\Theta_1(T_a) = \Theta_{1,ref} \left[ 1 + \alpha_1(T_a - T_{ref}) + \beta_1(T_a - T_{ref})^2 \right]$$

$$\Theta_2(T_a) = \Theta_{2,ref} \left[ 1 + \alpha_2(T_a - T_{ref}) + \beta_2(T_a - T_{ref})^2 \right]$$

we obtain for the weight a linear function in temperature:

$$w(T_a) = w_0 + w_1(T_a - T_{ref}).$$

The coefficients are then given by

$$w_0 = \frac{\Theta_{1,ref}}{\Theta_{2,ref}} \frac{\alpha_1 \alpha_2 - \beta_1}{\alpha_2^2 - \beta_2}$$

$$w_1 = \frac{\Theta_{1,ref}}{\Theta_{2,ref}} \frac{\alpha_2 \beta_1 - \alpha_1 \beta_2}{\alpha_2^2 - \beta_2}$$

For $\beta_1 = \beta_2 = 0$, we recover the result in Eq. Eq. (4).

If necessary, one can also use an additional humidity (or disturbance gas) sensor 18 to determine absolute humidity AH (or the concentration of a disturbance gas) and define a weight $w(AH)$ which allows one to obtain a temperature-independent signal at different humidity levels (or different levels of any other disturbance gas).

Finally, one can use an absolute pressure sensor 19 to determine absolute pressure $p$ and define a pressure dependent weight $w(p)$ in order to obtain a temperature-independent signal at all relevant ambient pressures.

It is also possible to use an arbitrary combination of the above possibilities.

Example 4: Thermistor-based thermal sensor

Instead of using thermopiles as temperature sensing elements TS1-TS4, one may also use thermistors. A simple example is illustrated by the sixth embodiment of a thermal sensor device that is shown in Fig. 8. Here, the measurement bridges 11 and 12 each carry a temperature sensing element TS1, TS2 in the form of a thermistor with temperature dependent resistivity $\rho_1$ and $\rho_2$, respectively, resulting in resistances $R_1$ and $R_2$. It is assumed that the self-heating of the two thermistors can be neglected as compared to the dissipated heat of the heater. The resistances $R_1$ and $R_2$ change in response to a change of the averaged temperatures $T_1$ and $T_2$ of the two thermistors, respectively. Hence, we can define two thermal signals $\Theta_1 = R_1(T_1)$ and $\Theta_2 = R_2(T_2)$ which we combine into a signal 0 according to Eq. (1) and Eq. (4).

The condition Eq. (5) can be fulfilled if the resistivities $\rho_1$, $\rho_2$ of the thermistors on the two measurement bridges have different temperature dependencies, and in particular if they have different non-linearities in their temperature dependencies. For example, one thermistor could be a PTC (positive temperature coefficient) thermistor characterized by an electrical resistivity $\rho_{PTC}(T) = \rho_{PTC}(T_0)e^{\alpha(T-T_0)}$ with a positive coefficient $\alpha > 0$ and the other could be an NTC (negative temperature coefficient) thermistor with an electrical resistivity $\rho_{NTC}(T) = \rho_{NTC}(T_0)e^{B\left(\frac{1}{T} - \frac{1}{T_0}\right)}$ characterized by the positive parameter $B > 0$.

Of course, also the additional concepts discussed above, such as spy normalization, temperature compensation sensing element and compensation of pressure and/or humidity can be applied with thermistors as well. Instead of a temperature compensation sensing element as in Example 3 or in addition thereto, a thermistor may be placed sufficiently far removed from the heater such that the resistance of that thermistor is a direct measure of the absolute ambient temperature. In some embodiments, this resistance may be used as the second signal $\Theta_2$.

The resistances of the thermistors may be converted into voltages in any known manner, e.g., by feeding a constant current to each thermistor and measuring the resulting voltage drop across the thermistor, or by employing a Wheatstone bridge. The resulting voltages may then be digitized. In this manner, all operations that have been described above in the context of thermopiles (which directly yield temperature-dependent voltages) can also be applied with thermistors (after conversion of the resistance into a voltage).

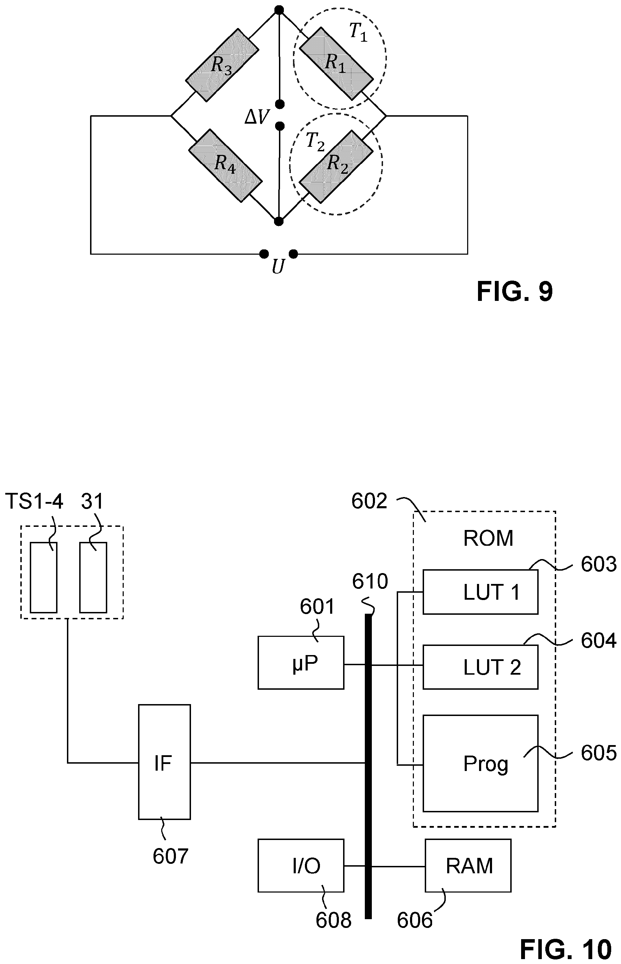

In the alternative, a combination signal (which may be considered a generalized weighted difference of the resistances $R_1$ and $R_2$) may be obtained in hardware using a single Wheatstone-bridge circuit as shown in Fig 9. Here, $R_3$

and $R_4$ are the resistances of the additional resistors in the Wheatstone bridge. By tuning $R_3$ and $R_4$, it is possible to obtain a measured voltage that is independent of the ambient temperature. To be specific, we define a first thermal signal $\Theta_1 = R_1/R_3$, a second thermal signal $\Theta_2 = R_2/R_3$ and a combination signal

$$\Theta = \frac{\Theta_1}{\Theta_1 + 1} - \frac{\Theta_2}{\Theta_2 + w}.$$

The combination signal is simply the ratio of the measured voltage to the applied voltage of the Wheatstone-bridge, i.e., $\Theta = \frac{\Delta V}{U}$, and the weight parameter is given as $w = \frac{R_4}{R_3}$. It is now possible to solve for $w$ such that the conditions Eq. (2) and Eq. (3) are fulfilled.

Processing circuitry

Figure 10 illustrates, in a highly schematic manner, a block diagram of a possible embodiment of the processing circuitry 16. The processing circuitry comprises a processor ($\mu$P) 601, a non-volatile (e.g., Flash ROM) memory 602, and a volatile (RAM) memory 606. The processor $\mu$P comunicates with the memory devices 602, 606 via a bus 610. The non-volatile memory 602 stores, inter alia, plural lookup tables (LUT), only two such lookup tables 603, 604 being illustrated. The lookup tables may store, for instance, calibration data relating the thermal signal $\Theta$ to actual values of the thermal conductivity or to another target value that correlates with thermal conductivity, such as the concentration of a selected (Prog) 605 for execution in the processor $\mu$P. Via a device interface (IF) 607, which may comprise one or more ADCs and one or more DACs, the processing circuitry 6 drives the heater element 31 and reads out the various temperature sensors TS1-TS4. A wired or wireless input/output interface I/O 608 enables communication to the outside world.

The processing circuitry 16 may be completely integrated on the same silicon chip with the other components of the microthermal sensor 10, or at least parts of the processing circuitry 16 may be implemented separately.

Modifications

From the above description it apparent that the invention is not limited to the above-described exemplary embodiments, and that many modifications are possible.

In particular, while the above-described exemplary embodiments employ measurement bridges that span a recess or opening of a substrate, the temperature sensing elements may be arranged on other structures than bridges, as long as heat from a heater can be transferred to the temperature sensing elements through the fluid sample while excessive heat transfer from the heater to the temperature sensing elements through other pathways is avoided. For instance, the temperature sensing elements may be formed on a thin dielectric membrane.

**Claims**

1. A thermal sensor device for determining a target property ($x_{target}$) of a target fluid, the thermal sensor device comprising:

   a heater or cooler (31);
   a first temperature sensing element (TS1);
   a second temperature sensing element (TS2); and
   control circuitry (16) for operating the heater or cooler (31) to create a thermal stimulus and for deriving a thermal signal (0) based on responses ($V_{TS1}$, $V_{TS2}$) of the first and second temperature sensing elements (TS1, TS2) to the thermal stimulus,
   **characterized in that**
   the first temperature sensing element (TS1) has a first temperature-dependent intensive physical property ($S_1$; $\rho_1$) whose temperature dependence influences the response ($V_{TS1}$) of the first temperature sensing element (TS1) to the thermal stimulus, the second temperature sensing element (TS2) has a second temperature-dependent intensive physical property ($S_2$; $\rho_2$) whose temperature dependence influences the response ($V_{TS2}$) of the second temperature sensing element (TS2) to the thermal stimulus, the first and second temperature-dependent intensive physical properties ($S_1$, $S_2$; $\rho_1$, $\rho_2$) having different temperature dependencies,
   the thermal signal (0) is a combination signal formed from a first signal ($\Theta_1$) and a second signal ($\Theta_2$), each of the

first and second signals ($\Theta_1$, $\Theta_2$) being based on the responses ($V_{TS1}$, $V_{TS2}$) of the first and second temperature sensing elements (TS1, TS2) to the thermal stimulus, and
the control circuitry is configured to form the combination signal such that, at least at predetermined reference conditions, the thermal signal ($\Theta$) is sensitive to changes of the target property ($x_{target}$) while having a weaker sensitivity to changes of an ambient temperature ($T_a$) of the thermal sensor relative to its sensitivity to changes of the target property ($x_{target}$) than each of the responses ($V_{TS1}$, $V_{TS2}$) of the first and second temperature sensing elements (TS1, TS2) and/or than each of the first and second signals ($\Theta_1$, $\Theta_2$).

2. The thermal sensor device of claim 1, wherein the control circuitry is configured to form the combination signal such that, at the reference conditions, the resulting thermal signal ($\Theta$) is essentially insensitive to changes of the ambient temperature ($T_a$).

3. The thermal sensor device of claim 1 or 2, wherein the combination signal is a weighted difference of the first and second signals ($\Theta_1$, $\Theta_2$).

4. The thermal sensor device of claim 3,

   wherein the control circuitry is configured to form the combination according to the formula

   $$\Theta = \Theta_1 - w\,\Theta_2$$

   where $\Theta_1$ and $\Theta_2$ designate the first and second signals, and w designates a weight,
   wherein the weight meets the formula

   $$w = \frac{\left(\dfrac{\partial \Theta_1}{\partial T_a}\right)_{ref}}{\left(\dfrac{\partial \Theta_2}{\partial T_a}\right)_{ref}},$$

   wherein $T_a$ designates the ambient temperature,
   wherein

   $$\left(\frac{\partial \Theta_1}{\partial T_a}\right)_{ref}$$

   designates a partial derivative of the first signal with respect to the ambient temperature at the reference conditions, and
   wherein

   $$\left(\frac{\partial \Theta_2}{\partial T_a}\right)_{ref}$$

   designates a partial derivative of the second signal with respect to the ambient temperature at the reference conditions.

5. The thermal sensor device of any one of the preceding claims,

   wherein each of the first and second temperature sensing elements (TS1, TS2) comprises at least one thermopile,
   wherein the first temperature-dependent intensive physical property ($S_1$; $\rho_1$) is a first Seebeck coefficient ($S_1$),
   wherein the second temperature-dependent intensive physical property ($S_2$; $\rho_2$) is a second Seebeck coefficient ($S_2$), and
   wherein the first and second Seebeck coefficients ($S_1$, $S_2$) have different temperature dependencies.

**6.** The thermal sensor device of claim 5,

wherein the first and second temperature sensing elements (TS1, TS2) are arranged and configured such that the responses of the first and second temperature sensing elements (TS1, TS2) to the thermal stimulus at the reference conditions have different sensitivities to changes of the target property of the target fluid while having essentially the same sensitivity to changes of the ambient temperature ($T_a$), and
wherein the weighted differential signal is formed in hardware by connecting the first and second temperature sensing elements (TS1, TS2) in an anti-series configuration.

**7.** The thermal sensor device of any one of claims 1-4,

wherein each of the first and second temperature sensing elements (TS1, TS2) comprises at least one thermistor,
wherein the first temperature-dependent intensive physical property ($S_1$; $\rho_1$) is a first resistivity ($\rho_1$),
wherein the second temperature-dependent intensive physical property ($S_2$; $\rho_2$) is a second resistivity ($\rho_2$), and
wherein the first and second resistivities ($\rho_1$, $\rho_2$) have different temperature dependencies.

**8.** The thermal sensor device of any one of the preceding claims,

further comprising a third temperature sensing element (TS3) arranged to determine an indicator of a magnitude of the thermal stimulus created by the heater or cooler (31),
wherein the processing circuitry (16) is configured to carry out a normalization of the responses of the first and/or second temperature sensing elements (TS1, TS2) when deriving the thermal signal ($\Theta$), using a signal from the third temperature sensing element (TS3).

**9.** The thermal sensor device of claim 8,

wherein the processing circuitry (6) comprises an analog-to-digital converter (ADC) having an analog voltage input and a reference voltage input,
wherein the analog voltage input is configured to receive a signal that is based on the responses of the first and/or second temperature sensing elements (TS1, TS2) to the thermal stimulus, and
wherein the reference voltage input is configured to receive a signal that is based on a response of the third temperature sensing element (TS3) to the thermal stimulus.

**10.** The thermal sensor device of claim 8 or 9,

wherein the third temperature sensing element (TS3) has a third temperature-dependent intensive physical property ($S_3$; $p_3$) whose temperature dependence influences a response of the third temperature sensing element (TS3) to the thermal stimulus,
wherein the second and third temperature-dependent intensive physical properties ($S_2$, $S_3$, $\rho_2$, $\rho_3$) have different temperature dependencies, and
wherein the second and third temperature sensing elements (TS2, TS3) are arranged so as to be exposed to the same temperature distribution.

**11.** The thermal sensor of any one of the preceding claims,

wherein the first temperature sensing element (TS1) is disposed on a first measurement structure (11),
wherein the second temperature sensing element (TS1) is disposed on a second measurement structure (12),
wherein the first and second measurement structures (11, 12) have different heat dissipation capabilities,
wherein the target fluid is a mixture of a carrier gas, a target gas and a disturbance gas,
wherein the target property ($x_{target}$) is a concentration of the target gas, and
wherein the processing circuitry (6) is configured to form the combination signal in such a manner that the thermal signal ($\Theta$) is sensitive to changes of the concentration of the target gas while having a weaker sensitivity to changes of a concentration of the disturbance gas than each of the responses of the first and second temperature sensing elements (TS1, TS2) relative to its sensitivity to changes of the concentration of the target gas due to the different heat dissipation capabilities of the first and second measurement structures (11, 12).

**12.** The thermal sensor device of claim 11, comprising a substrate (14) having an opening or recess (41),

wherein the first measurement structure (11) is a first measurement bridge that spans the opening or recess (41),

wherein the second measurement structure (12) is a second measurement bridge that spans the opening or recess (41), and

wherein the first and second measurement bridges differ with respect to dimensions and/or structure such that the first and second measurement bridges (11, 12) have different heat dissipation capabilities.

13. The thermal sensor of any one of the preceding claims, comprising a substrate (14) having an opening or recess (41),

wherein the first temperature sensing element (TS1) is disposed on a first measurement structure (11), the first measurement structure (11) being a first measurement bridge that spans the opening or recess (41),

wherein the second temperature sensing element (TS1) is disposed on a second measurement structure (12), the second measurement structure (2) being a second measurement bridge that spans the opening or recess (41),

wherein the heater (31) is arranged on a heater bridge (13) that spans the opening or recess (41), the heater bridge (13) being arranged at a first distance ($d_1$) from the first measurement bridge (11) and at a second distance ($d_2$) from the second measurement bridge (12),

wherein each of the first and second distances ($d_1$, $d_2$) is between 2 and 100 micrometers, and

wherein the processing circuitry (6) is configured to form the combination signal in such a manner that the thermal signal ($\Theta$) is sensitive to changes of the target property ($x_{target}$) while having a weaker sensitivity to changes of pressure relative to its sensitivity of changes of the target property ($x_{target}$) than each of the responses of the first and second temperature sensing elements (TS1, TS2) due to the Knudsen effect.

14. A method for determining a target property ($x_{target}$) of a target fluid, the method comprising:

exposing the thermal sensor device (10) of any one of the preceding claims to the target fluid;

creating a thermal stimulus using the heater or cooler (31);

deriving a thermal signal ($\Theta$) based on responses ($\Theta_1$, $\Theta_2$) of the first and second temperature sensing elements (TS1, TS2) to the thermal stimulus; and

determining the target property ($x_{target}$) based on the thermal signal ($\Theta$),

wherein the thermal signal ($\Theta$) is a combination signal formed from a first signal ($\Theta_1$) and a second signal ($\Theta_2$), each of the first and second signals ($\Theta_1$, $\Theta_2$) being based on the responses of the first and second temperature sensing elements (TS1, TS2) to the thermal stimulus, and

wherein the combination signal is formed such that, at least at predetermined reference conditions, the thermal signal ($\Theta$) is sensitive to changes of the target property ($x_{target}$) while having a weaker sensitivity to changes of an ambient temperature ($T_a$) of the thermal sensor relative to its sensitivity to changes of the target property ($x_{target}$) than each of the responses of the first and second temperature sensing elements (TS1, TS2).

**FIG. 1A**

**FIG. 1B**

**FIG. 1C**

**FIG. 1D**

**FIG. 2**

**FIG. 3**

**FIG. 4**

**FIG. 5**

**FIG. 6A**

**FIG. 6B**

FIG. 7

FIG. 8

**FIG. 9**

**FIG. 10**

Europäisches
Patentamt

European
Patent Office

Office européen
des brevets

# EUROPEAN SEARCH REPORT

**Application Number**

EP 23 17 4630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/333308 A1 (BILLAT SOPHIE [DE] ET AL) 22 October 2020 (2020-10-22) | 1-3,5-14 | INV.<br>G01N25/18<br>G01N27/18 |
| A | * paragraph [0071] *<br>* paragraph [0083] *<br>* paragraph [0103] – paragraph [0105] *<br>* paragraph [0108] *<br>* paragraph [0138] – paragraph [0147] *<br>* paragraph [0273] *<br>* figure 1A *<br>* figure 1C *<br>* figure 19 * | 4 | |
| X | WO 2022/268896 A1 (FLUSSO LTD [GB]) 29 December 2022 (2022-12-29) | 1-3,5,6, 8-14 | |
| A | * page 6 *<br>* page 18 *<br>* page 24 *<br>* page 28 – page 29 *<br>* page 38 *<br>* figure 5 *<br>* page 14 * | 4 | |
| X | US 2022/120702 A1 (UDREA FLORIN [GB] ET AL) 21 April 2022 (2022-04-21) | 1-3,5,6, 8-14 | TECHNICAL FIELDS SEARCHED (IPC)<br><br>G01N |
| A | * paragraph [0045] *<br>* paragraph [0084] *<br>* paragraph [0091] *<br>* paragraph [0132] *<br>* paragraph [0167] *<br>* paragraph [0204] *<br>* paragraph [0229] – paragraph [0232] * | 4 | |

The present search report has been drawn up for all claims

| Place of search | Date of completion of the search | Examiner |
|---|---|---|
| The Hague | 17 November 2023 | Traversa, Marzia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 17 4630**

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2023

| Patent document cited in search report | | | Publication date | Patent family member(s) | | | Publication date |
|---|---|---|---|---|---|---|---|
| US 2020333308 | A1 | | 22-10-2020 | AU | 2019205603 | A1 | 23-07-2020 |
| | | | | CA | 3087632 | A1 | 11-07-2019 |
| | | | | CN | 112074729 | A | 11-12-2020 |
| | | | | EP | 3735581 | A1 | 11-11-2020 |
| | | | | JP | 7055543 | B2 | 18-04-2022 |
| | | | | JP | 2021509955 | A | 08-04-2021 |
| | | | | KR | 20200101989 | A | 28-08-2020 |
| | | | | US | 2020333308 | A1 | 22-10-2020 |
| | | | | WO | 2019135004 | A1 | 11-07-2019 |
| WO 2022268896 | A1 | | 29-12-2022 | NONE | | | |
| US 2022120702 | A1 | | 21-04-2022 | CN | 114902020 | A | 12-08-2022 |
| | | | | EP | 4048983 | A1 | 31-08-2022 |
| | | | | TW | 202134605 | A | 16-09-2021 |
| | | | | US | 2021116281 | A1 | 22-04-2021 |
| | | | | US | 2022120701 | A1 | 21-04-2022 |
| | | | | US | 2022120702 | A1 | 21-04-2022 |
| | | | | US | 2022333966 | A1 | 20-10-2022 |
| | | | | WO | 2021078776 | A1 | 29-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3367087 A2
- US 08246722
- EP 21215403 A
- US 11162928 B